# EUROPÄISCHE PATENTSCHRIFT

(11) **EP 1 921 374 B1**
(45) Veröffentlichungstag und Bekanntmachung des Hinweises auf die Patenterteilung: **21.07.2010**
(21) Anmeldenummer: 07021871.4
(22) Anmeldetag: 12.11.2007
(51) Int. Cl.: F21V 21/03, H02G 3/20

(54) **Haltesystem für ein elektrisches Gerät**
Holding system for an electric device
Dispositif de maintien d'un appareil électrique

(30) Priorität: 13.11.2006 DE 202006017280 U
(43) Veröffentlichungstag der Anmeldung: 14.05.2008
(73) Patentinhaber: Greiner-Fuchs, Bettina, 97478 Knetzgau (DE)
(72) Erfinder:
(74) Vertreter: Tergau & Pohl Patentanwälte

(56) Entgegenhaltungen:
- EP-A- 1 037 351
- CH-A- 164 355
- DE-A1- 10 213 425
- DE-U1- 20 203 550
- DE-U1- 29 810 467
- DE-U1-202004 006 733
- GB-A- 195 914
- GB-A- 2 101 290

## Beschreibung

Die Erfindung bezieht sich auf ein Haltesystem für mindestens ein elektrisches Gerät, vorzugsweise wenigstens einen Leuchtkörper oder eine Steckdose, das über das Haltesystem, beispielsweise eine Aufhängung, an ein unbewegliches Bauteil, beispielsweise eine Decke oder eine Wand, angeschlossen ist.

Eine aus CH 73241 bekannte Beleuchtungsanordnung ist über eine Tragstange und ein Haltesystem mit einer Decke verbunden. Das Haltesystem enthält eine Kugelgelenkaufhängung, bei der ein kugelförmiger Gelenkkopf in zwei getrennten Hohlkugelgelenken drehbar gelagert ist.

In einer aus DE 89 14 528 U1 weiteren bekannten Beleuchtungsanordnung ist ein Haltesystem für Halogen-Niedervoltlampen nach allen Seiten stufenlos dreh- und schwenkbar gelagert. Die kugelförmige Aufhängung ist geteilt und besteht aus elektrisch getrennten Halbschalen, die durch Magnetkräfte gehalten werden (DBGM 8914528). Da sowohl die Kugel, als auch die Haltemagneten sich in der elektrischen Zuleitung zu den Lampen befinden, erfordert die Anordnung einen erheblichen Aufwand und Isolationsprobleme sind nicht auszuschliessen.

Aus der DE 199 46 621 C2 ist ein weiteres Haltesystem bekannt. Das System umfasst einen deckenmontierbaren Deckenadapter und einen an einem Beleuchtungskörper montierbaren Leuchtenadapter. Der Deckenadapter enthält eine erste Kontaktträgerplatte mit Anschlüssen für die Adern einer netzseitigen elektrischen Zuleitung. Der Leuchtenadapter enthält eine zweite Kontaktträgerplatte mit Anschlüssen für die Adern einer leuchtenseitigen Verbraucherleitung. Der Leuchtenadapter ist dabei derart an den Deckenadapter befestigbar, dass zwischen den Kontaktträgerplatten, und damit zwischen entsprechenden Adern der jeweils an die Kontaktträgerplatten angeschlossenen Zuleitung bzw. Verbraucherleitung ein elektrischer Kontakt geschlossen wird.

Ein Haltesystem nach dem Oberbegriff des Anspruchs 1 ist jeweils aus GB 195 914 A, DE 298 10 467 U1, CH 164 355 A, GB 2 101 290 A und DE 102 13 425 A1 bekannt.

Der Erfindung liegt die Aufgabe zugrunde, ein solches Haltesystem besonders einfach zu gestalten. Diese Aufgabe wird erfindungsgemäß gelöst durch die Merkmale des Anspruchs 1.

Vorteilhafte Ausgestaltungen der Erfindung ergeben sich aus den Unteransprüchen und den nachstehenden Ausführungen.

In bevorzugter Ausbildung des Haltesystems sind drei oder mehr Abstandshalter vorgesehen, die im Wesentlichen stiftförmig ausgebildet sind, und die damit einen im Vergleich zu der Grundplatte geringen Durchmesser aufweisen. Jeder Abstandshalter ist dabei als Schraubbuchse ausgebildet, in den eine zur Halterung weiterer Bestandteile des Haltesystems vorgesehene Befestigungsschraube einschraubbar ist. Die gegebenenfalls in dem oder jedem Abstandshalter fixierten Befestigungsschrauben dienen bevorzugt zugleich zur Befestigung einer flachen Auflage, die mit einer Öffnung zur Aufhängung einer das Gerät haltenden Kugel versehen ist. Zur aufdrehsicheren Fixierung der Befestigungsschrauben an den Abstandshaltern sind die Befestigungsschrauben zweckmäßigerweise mit Kontermuttern versehen.

Die Kugel ist insbesondere mit einer Gewindebohrung versehen, so dass das Gerät - z.B. eine elektrische Leuchte - in die Kugel eingeschraubt werden kann. Zwischen der Grundplatte und der Auflage ist vorteilhafterweise eine Begrenzungsplatte vorgesehen, die die gegebenenfalls vorgesehene Kugel an der von der Auflage abgewandten Seite einfasst.

Die Grundplatte ist vorzugsweise zur Befestigung wenigstens einer Lüsterklemme vorgesehen. Diese Lüsterklemme ist insbesondere zwischen der Grundplatte und dem Bauteil angeordnet.

Die Grundplatte in zweckmäßiger Weiterbildung mit einem Baldachin abgedeckt.

Die Grundplatte ist bevorzugt scheibenförmig ausgebildet und ist an ihrem Rande mit wenigstens einer Aussparung versehen, die insbesondere mit Befestigungsmitteln des Baldachins zusammenwirkt. Als Befestigungsmittel dienen dabei zweckmäßigerweise Noppen, die derart am Rand des insbesondere kappenförmigen Baldachins angebracht sind, dass sie beim Aufsetzen des Baldachins auf die Grundplatte in die Aussparungen der letzteren eingreifen. Der Baldachin wird dabei nach dem Aufsetzen gegenüber der Grundplatte verdreht, so dass die Noppen zu den korrespondierenden Aussparungen versetzt werden, und der Baldachin dadurch nach Art eines Bajonettverschlusses an der Grundplatte gehalten wird.

Im Sinne einer besonders einfachen Montage der Auflage bilden die Befestigungsschrauben mit der Auflage bevorzugt einen Bajonettverschluss. Die Befestigungen sind hierbei vorteilhafterweise als Senkkopfschrauben ausgebildet.

In einer vorteilhaften Variante des Haltesystems ist die Grundplatte zur Befestigung einer Schraubfassung, z. B. für ein Beleuchtungsmittel, vorgesehen. In einer weiteren vorteilhaften Variante ist die Grundplatte zusätzlich oder alternativ zur Befestigung einer Steckdose vorgesehen. Die Steckdose ist dabei insbesondere alternativ an der Auflage oder einer mit der Grundplatte verbundenen Zwischenplatte befestigt.

In einer weiteren vorteilhaften Variante des Haltesystems ist die Grundplatte zur Versorgung einer Vielzahl von Niedervolt-Strahlern vorgesehen ist. Dabei ist mit der Grundplatte insbesondere ein etwa hohlzylindrisches Gehäuse verbindbar, dass mit Leitungszuführungen eine Baueinheit bildet. Zur Befestigung des Gehäuses an der Grundplatte ist dieses zweckmäßigerweise an oberen (d.h. in Einbaustellung der Grundplatte zugekehrten) Rand mit Noppen versehen, die mit entsprechenden Aussparungen am Rand der Grundplatte einen Bajonettverschluss bilden.

Das Gehäuse ist vorteilhafterweise mit einer Verdrehungssicherung versehen, die eine unbeabsichtigte Verdrehung des Gehäuses gegenüber der Grundplatte und somit ein mögliches Abfallen des Gehäuses von der Grundplatte verhindert. Die Verdrehsicherung umfasst insbesondere mit einem am Gehäuse befestigten Winkel der mit einer gegen die Grundplatte verdrehbaren Arretierungsschraube versehen ist. Die Reibung der Arretierungsschraube hält dabei die Verbindung des Gehäuses mit der Grundplatte in einer stabilen Lage hält.

Die Grundplatte ist optional mit einer Bodenplatte versehen, die mit einem Bajonettverschluss an der Grundplatte befestigbar ist.

Um eine einfache elektrische Kontaktierung des Geräts zu ermöglichen, ist an der Auflage vorzugsweise ein Stecker ausgebildet, der mit einer in der Grundplatte angeordneten Dose eine elektrische Steckverbindung bildet. Zweckmäßigerweise sind Stecker und Dose derart zueinander angeordnet, dass sie bei der bestimmungsgemäßen Montage der Auflage automatisch miteinander kontaktieren.

Die Auflage ist mit dem gegebenenfalls vorgesehenen Gehäuse zweckmäßigerweise als gemeinsames Bauteil ausbildet, das mit den Befestigungsschrauben einen Bajonettverschluss bildet. Das Gehäuse ist hierbei insbesondere mit einem rohrförmigen Tragteil unlösbar verbunden, das die hier bevorzugt scheibenförmige Auflage am Umfang umschließt. Das Ende des Tragteils ist dabei vorteilhafterweise zur Vorzentrierung der Auflage für den Bajonettverschluss vorgesehen.

Ein vereinfachter elektrischer Anschluss des Geräts wird in einer weiteren bevorzugten Variante des Haltesystems dadurch ermöglicht, dass die Begrenzungsplatte mindestens zwei Anschlussklemmen zur Kontaktierung je einer elektrischen Anschlussleitung sowie mindestens zwei jeweils mit einer Anschlussklemme leitend verbundene Kontaktfelder aufweist. Jedes dieser Kontaktfelder ist an einer Anlagefläche der Begrenzungsplatte angeordnet, an der die das Gerät haltende Kugel in eingebautem Zustand mit ihrem Umfang anliegt. Am Umfang der Kugel sind mindestens zwei jeweils Gegenkontaktfelder angeordnet, deren jedes mit einem Kontaktfeld korrespondiert. Jedes dieser Gegenkontaktfelder ist wiederum mit einer geräteseitigen Anschlussleitung kontaktierbar.

In einer vorteilhaften Ausbildung dieser Variante sind drei Anschlussklemmen und drei jeweils paarweise damit verbundene Kontaktfelder vorgesehen, wobei die Kontaktfelder gleichmäßig um die Anlagefläche der Begrenzungsplatte herum angeordnet sind. Dies ermöglicht z.B. den Anschluss eines Nullleiters und zweier Phasenleitungen an die Anschlussklemmen. Enthält das Gerät nur einen elektrischen Verbraucher, z.B. eine Glühlampe, so werden die Anschlüsse dieses Verbrauchers mit jeweils einem Gegenkontaktfeld der Kugel leitend verbunden. In diesem Fall kann durch einfache Drehung der Kugel mit dem darin gehaltenen Gerät alternativ eine der beiden Phasenleitungen über den Verbraucher auf den Nullleiter geschaltet kann. Es kann auf diese Weise also noch nach Montage des Geräts entschieden werden, welchem von zwei Stromkreisen einer Hausinstallation der Verbraucher zugeordnet werden soll. Das Haltesystem kann ebenso aber auch zum Beschalten von nachgeschalteten Geräten in einer Serienschaltung verwendet werden, indem der Verbraucher durch entsprechende Drehung der Kugel zwischen eine zuführende und eine abführende Stromleitung der Serienschaltung geschaltet wird. In bevorzugter Ausbildung enthält das Gerät zwei Verbraucher, z.B. also zwei Glühlampen, die in diesem Fall mit jeweils einem Anschluss in einem gemeinsamen Gegenkontaktfeld zusammengeschlossen sind, während der jeweils übrige Anschluss der beiden Verbraucher mit einem zweiten bzw. dritten Gegenkontaktfeld verbunden ist. In diesem Fall kann durch Drehen der Kugel wahlweise der erste Verbraucher, der zweite Verbraucher oder beide Verbraucher zwischen eine der beiden Phasenleitungen und den gemeinsamen Nullleiter geschaltet werden.

Zwischen zwei aneinander-grenzenden Kontaktfeldern ist zweckmäßigerweise jeweils ein Abstand eingehalten, der die entsprechende Ausdehnung eines Gegenkontaktfeldes übersteigt. Auf diese Weise gibt es bei der Drehung der Kugel gegenüber der Begrenzungsplatte zwischen zwei Kontaktfeldern jeweils eine Nullstellung, in der die Begrenzungsfelder von den benachbarten Kontaktfeldern dekontaktiert sind, und das Gerät somit von der Stromversorgung getrennt ist.

Bevorzugt ist zwischen jeder Anschlussklemme und der Grundplatte ein Federelement, insbesondere in Form einer Schraubenfeder, angeordnet, die die Begrenzungsplatte in Richtung auf die Auflage vorspannt. Die Federelemente sorgen insbesondere für eine sichere Anlage der Begrenzungsplatte auf der Kugeloberfläche und somit für eine gute Kontaktierung zwischen den Kontaktfeldern und den jeweils zugeordneten Gegenkontaktfeldern.

Zur weiteren Erläuterung der Erfindung wird auf die Zeichnung Bezug genommen.

Es zeigen:
- Fig. 1: in einem Querschnitt eine Beleuchtungsanordnung mit einem Haltesystem, das eine Kugelaufhängung für einen Beleuchtungskörper enthält,
- Fig. 1a: in Draufsicht von unten das (ohne Baldachin dargestellte) Haltesystem gemäß Fig. 1,
- Fig. 1b: in Draufsicht von unten eine Grundplatte des Haltesystems (entsprechend einem Schnitt Ib-Ib durch das Haltesystem gemäß Fig.1 ohne Baldachin),
- Fig. 1c: in einem Querschnitt Ic-Ic durch die Grundplatte gemäß Fig. 1b schematisch die Befestigung der Grundplatte an einem unbeweglichen Bauteil,
- Fig. 1d: in Draufsicht von unten eine Auflage des Haltesystems gemäß Fig. 1,
- Fig. 1e: die Auflage in einem Schnitt le-le gemäß Fig. 1d,
- Fig. 1f: in Draufsicht von unten eine Begrenzungsplatte des Haltesystems gemäß Fig. 1,
- Fig. 1g: die Begrenzungsplatte in einem Schnitt Ig-Ig gemäß Fig. 1f.
- Fig. 1h: in einem Querschnitt eine zur Aufhängung des Beleuchtungskörpers vorgesehene Kugel des Haltesystems gemäß Fig. 1 mit einem darin aufgehängten Hohlkörper zur Aufnahme von Leitern eines Beleuchtungskörpers,
- Fig. 1i: in Darstellung gemäß Fig. 1h eine alternative Ausführungsform der Kugel zur Halterung eines Kabels ,
- Fig. 1k: in Darstellung gemäß Fig. 1h wiederum die dortige Ausführungsform der Kugel mit dem daran aufgehängten Beleuchtungskörper,
- Fig. 2: in Darstellung gemäß Fig. 1 eine alternative Ausführung des Haltesystems mit einer fest mit einer Auflage verbundenen Schraubfassung für einen Beleuchtungskörper,
- Fig. 3: in Darstellung gemäß Fig. 1 eine weitere Ausführung des Haltesystems mit einer fest mit einer Auflage (dort als Zwischenplatten bezeichnet) verbundenen Schukosteckdose,
- Fig. 4: in Darstellung gemäß Fig. 1 eine weitere Ausführung des Haltesystems zur Stromversorgung einer Beleuchtungsanordnung mit Niedervoltstrahlern,
- Fig. 5: in einem Schnitt V-V gemäß Fig. 4 das dortige Haltesystem,
- Fig. 6: in Darstellung gemäß Fig. 1 eine weitere Ausführung des Haltesystems zur Stromversorgung einer Beleuchtungsanordnung mit Niedervoltstrahlern,
- Fig. 7: in einer Draufsicht VII-VII gemäss Fig. 6 das dortige Haltesystem,
- Fig. 8: in Darstellung gemäß Fig. 1 eine weitere Ausführung des Haltesystems zur Stromversorgung einer Beleuchtungsanordnung mit Niedervoltstrahlern,
- Fig. 8a: in Darstellung gemäß Fig. 1 ein bauteilseitiges Teil des Haltesystems gemäß Fig. 8 mit einer Grundplatte, Abstandshalter, Befestigungsschrauben und einem Transformator,
- Fig. 8b: in Darstellung gemäß Fig. 1 ein geräteseitiges Teil des Haltesystems gemäß Fig. 8 mit einer Auflage und einem mit dieser über ein Tragteil verbundenen Gehäuse,
- Fig. 9: in Darstellung gemäß Fig. 1 eine weitere Ausführung des Haltesystems mit einer Kugelaufhängung für einen Beleuchtungskörper, und
- Fig. 10: in einem Schnitt X-X gemäß Fig. 9 den dortigen Beleuchtungskörper.

Einander entsprechende Teile sind in allen Figuren stets mit gleichen Bezugszeichen versehen.

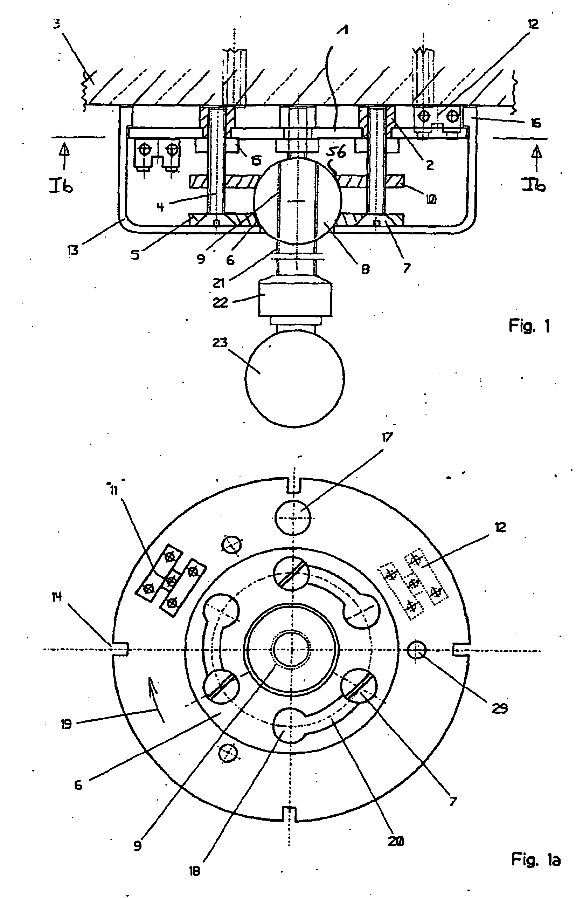

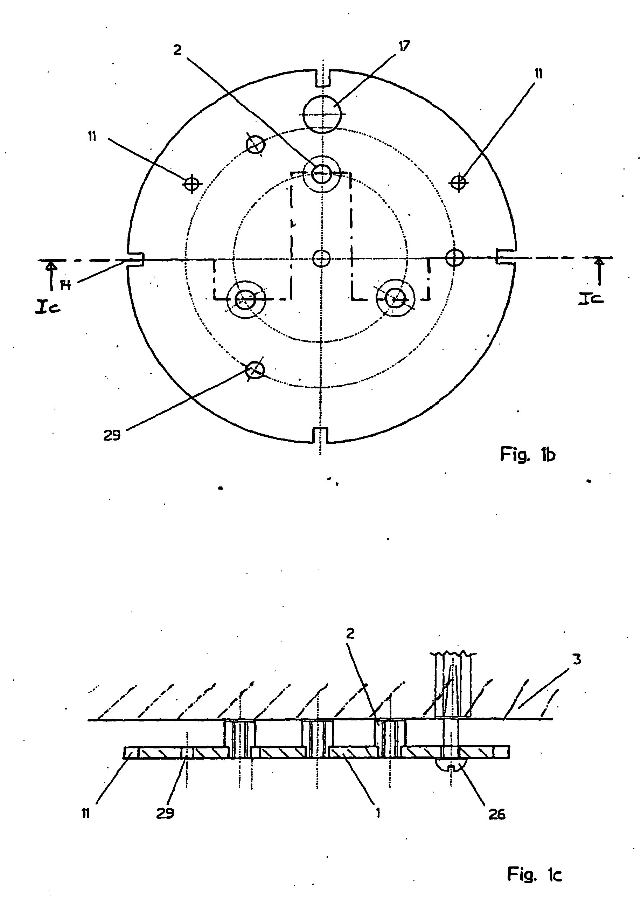

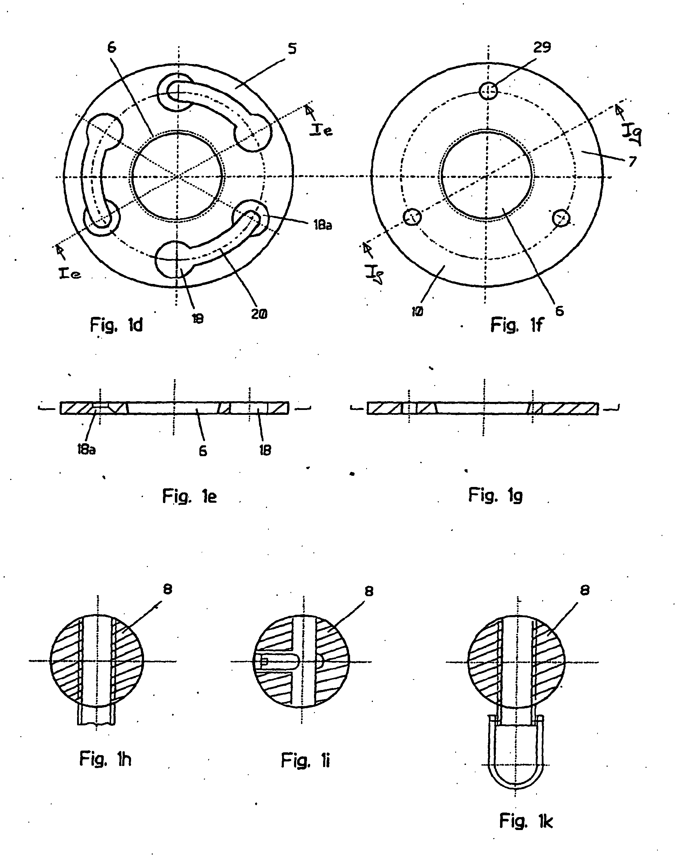

Gemäss Fig. 1 umfasst das Haltesystem eine Grundplatte (1), die vorzugsweise aus einem flachen scheibenförmigen Isolierstoffkörper, insbesondere aus einem spritzfähigen, selbsthärtendem Kunststoff auf Acrylnitrit - Styrol - Butadien - Basis bestehen, der unter der Handelsbezeichnung ABS bekannt ist. Das Haltesystem umfasst weiterhin Abstandshaltern (2), die vorzugsweise aus Metall, insbesondere aus metallischen Schraubbuchsen, bestehen. Die Grundplatte (1) wird im Zuge der Montage bestimmungsgemäß lösbar mit einem starren Bauteil (3), beispielsweise einer Decke oder auch einer Wand, verbunden. Die Verbindung soll eine Schraubverbindung sein, von der in der Figur lediglich zwei nicht näher bezeichnete Dübel angedeutet sind. Die Abstandshalter (2) sind im Montagezustand zwischen der Grundplatte (1) und der Bauteiloberfläche angeordnet, so dass die Grundplatte (1) in einem definierten Abstand zu dem Bauteil (3) fixiert ist.

Eine plattenförmige Auflage (5) für eine Kugel (8) ist mittels Befestigungsschrauben (4) in den als Abstandshalter (2) dienenden Schraubbuchsen verschraubt. Die Auflage (5) ist mit einer zentralen Öffnung (6) versehen, deren Durchmesser kleiner ist als der Durchmesser der Kugel (8), die als dreh- und schwenkbare Aufhängung für einen Beleuchtungskörper (23) dient.

Die Kugel (8) ist mit einer Gewindebohrung (9) versehen. In dieser Gewindebohrung (9) ist ein rohrförmiger Hohlkörper (21) eingeschraubt, der in der Fig. 1 nicht dargestellte elektrische Leiter zur Stromversorgung einer Schraubfassung (22) des Beleuchtungskörpers (23), vorzugsweise einer Glühbirne, enthalten kann. Zwischen der Grundplatte (1) und der Auflage (5) ist eine Begrenzungsplatte (10) vorgesehen, die im Falle einer Stoßbewegung in Richtung Bauteil (3) auf den Leuchtkörper (23) eine Beschädigung der in der Figur nicht dargestellten elektrischen Leiter verhindert. Die Befestigungsplatte (10) ist mit einer zentralen Öffnung (56) versehen, deren Durchmesser kleiner ist als der Durchmesser der Kugel (8), und in der die Kugel in der Montagestellung einliegt. Ferner ist die Begrenzungsplatte (10) mit Öffnungen für die Befestigungsschrauben (4) versehen. Der Durchmesser für diese Öffnungen ist vorzugsweise etwas grösser als der Durchmesser der Befestigungsschrauben (4), so dass die Begrenzungsplatte (10) in Längsrichtung der Befestigungsschrauben (4) beweglich ist. Die Befestigungsschrauben (4) können vorzugsweise mit Kontermuttern (15) versehen sein, die zusammen mit den Abstandshaltern (2) zur Befestigung der Auflage (5) dienen. Zum Anschluss der elektrischen Leiter für den Beleuchtungskörper (23) ist wenigstens eine Lüsterklemme (12) vorgesehen, die sowohl oberhalb, als unterhalb der Grundplatte (1) angeordnet, beispielsweise festgeschraubt, sein kann.

Zur Abdeckung des Haltesystems ist ein Baldachin (13) vorgesehen, der für die Kugel (8) und den Hohlkörper (21) mit einer in der Figur nicht näher bezeichneten Öffnung versehen ist. Dieser Baldachin (13) kann vorzugsweise an der Auflage (5) befestigt, insbesondere mit dieser verschraubt sein.

In einer besonders vorteilhaften weiteren Ausgestaltung des Haltesystems gemäss Fig. 1a kann der Baldachin (13) mit einem Drehverschluss versehen sein. Zu diesem Zweck ist der Rand an der Innenseite mit Noppen (16) versehen, die in Verbindung mit den Aussparungen (14) am Rand der Grundplatte (1) durch Drehung einen Bajonettverschluss bilden. In der Ansicht von unten ohne Baldachin gemäss Fig. 1a ist die Grundplatte (1) vorzugsweise mit wenigstens 2 Lüsterklemmen (12) zur Befestigung elektrischer Leiter versehen. Eine Freibohrung (17) ist zur Zuführung dieser Leiter aus dem Stromzuführungsnetz vorgesehen. Ferner sind innerhalb der Auflage (5) die Anordnung von Durchsteckbohrungen (18) sowie die im Durchmesser kleineren Haltebohrungen angedeutet. Die Durchsteckbohrungen (18) sind mit einem Langloch (20) mit einer der Haltebohrungen verbunden. Bohrungen zur Befestigung der Grundplatte (1) am Bauteil (3) sind in der Figur mit 29 bezeichnet. Ferner sind die zentrale Öffnung der Auflage (5) sowie die Gewindebohrung (9) der Kugel (8) sichtbar.

Mit eingehängter Kugel (8) wird die Auflage (5) mit ihren Durchsteckbohrungen (18) über die Senkköpfe (7) der Befestigungsschrauben (4) geschoben und dann verdreht, wie es in der Figur durch einen Richtungspfeil (19) angedeutet ist. Nach der Verdrehung der Auflage (5) wird diese nach Art eines Bajonettverschlusses durch die Senkköpfe (7) der Befestigungsschrauben (4) in ihrer Lage gehalten.

In der Ausführungsform der Grundplatte (1) gemäss Fig. 1b sind die Bohrungen (29) sowie die Abstandshalter (2) sichtbar.

Aus dem Schnitt der Fig. 1c sind neben den Abstandshaltern (2) der Grundplatte (1) auch eine der Befestigungsschrauben (26) ersichtlich.

Die Auflage (5) gemäss Fig. 1d ist mit den Durchsteckbohrungen (18) und Senkbohrungen (18a) versehen, die jeweils durch ein Langloch (20) verbunden sind.

Die Durchsteckbohrungen (18) sowie die Senkbohrungen (18a) und die Öffnungen (6) sind aus dem Schnitt der Fig. 1e, zu entnehmen.

Die Begrenzungsplatte (10) ist gemäss Fig. 1f mit nicht näher bezeichneten Freibohrungen versehen. Diese Freibohrungen sind auch im Schnitt der Fig. 1g erkennbar.

Fig. 1h zeigt die Aufhängung des Hohlkörpers in der Kugel, Fig. 1i die Befestigung eines Kabels in der Kugel, und Fig. 1k zeigt die Aufhängung eines Beleuchtungskörpers in der Kugel

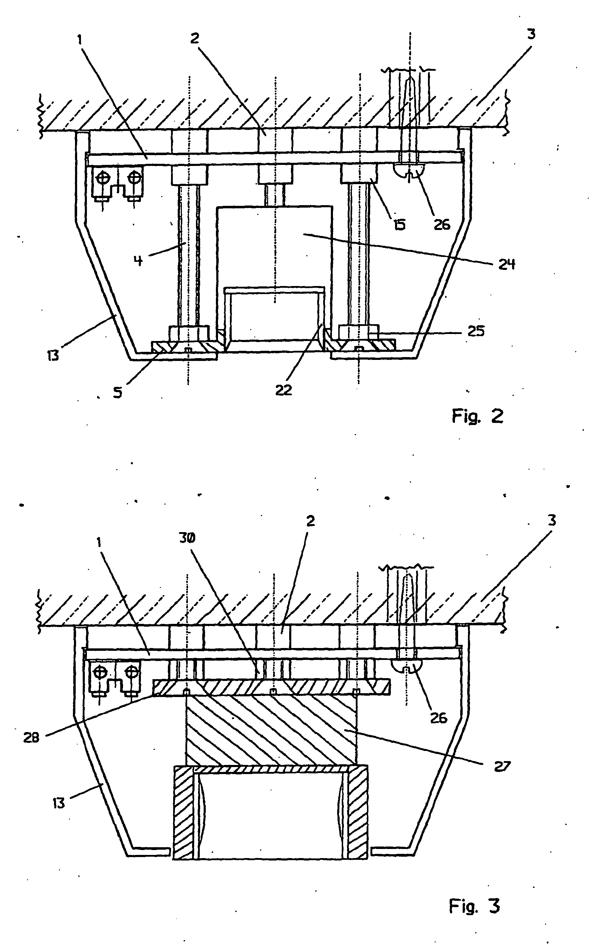

In der Ausführungsform nach Fig. 2 dient das Haltesystem mit der Grundplatte (1) zur Befestigung eines Beleuchtungskörpers, der mit einer Schraubfassung (22) in ein Isolierstück (24) eingesetzt ist und somit über die Auflage (5) mit dem Haltesystem starr verbunden ist. Zur Befestigung der Auflage (5) können die Befestigungsschrauben (4) mit Kontermuttern (25) versehen sein, mit denen die Auflage (5) fixiert ist Eine Befestigungsschraube (26) mit einen nicht näher bezeichneten Dübel ist in der Figur zur Befestigung der Grundplatte (1) an dem Bauteil (3) angedeutet. Das Isolierstück (24) kann mit seiner Schraubenfassung (22) und der Auflage (5) vorzugsweise ein gemeinsames Bauteil bilden.

Gemäss Fig. 3 dient das Haltesystem mit ihrer Grundplatte (1) zur Befestigung einer Steckdose (27), insbesondere einer Schutzkontaktsteckdose. An dem Bauteil (3) ist zu diesem Zweck eine Zwischenplatte (28) vorgesehen, die die Funktion der bei dem Ausführungsbeispiel gemäß Fig. 2 vorgesehenen Auflage (5) übernimmt. Diese Zwischenplatte (28) besteht aus Isolierstoff, vorzugsweise Kunststoff, und ist mit der Grundplatte (1) lösbar verbunden, beispielsweise verschraubt ist. Die nicht näher bezeichneten Schrauben sind mit rohrförmigen Abstandsstücken (30) versehen. Gemäss einer weiteren (nicht näher dargestellten) Ausgestaltung der Erfindung kann die Steckdose (27) auch direkt an der Grundplatte (1) befestigt sein.

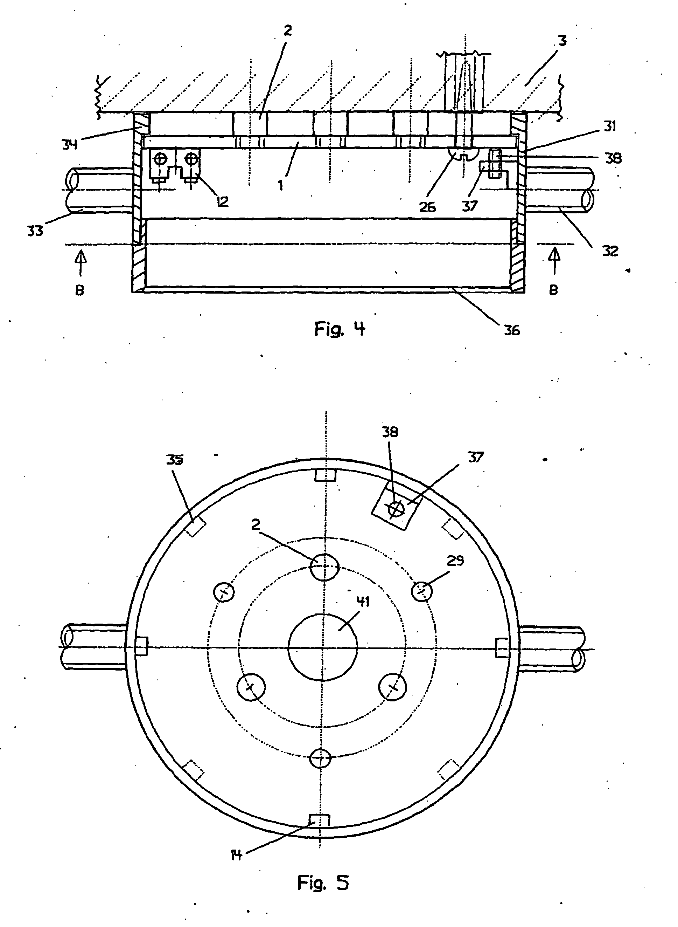

In der Ausführungsform gemäss Fig. 4 dient das Haltesystem zur elektrischen Versorgung einer Mehrzahl von in der Figur nicht dargestellten Niedervoltstrahlern, die an Leitungszuführungen (32) und (33) angeschlossen sind. In dieser Ausführungsform ist das Haltesystem mit seiner Grundplatte (1) von einem Gehäuse (31) umgeben, das an der Grundplatte (1) mit einem Drehverschluss befestigt ist. Zu diesem Zweck ist das Gehäuse (31) mit Noppen (34) und (35) versehen, welche in die Aussparungen (14) in der Grundplatte (1) eingreifen und nach Verdrehung das Gehäuse (31) halten. Zu diesem Drehverschluss gehört eine Verdrehungssicherung, die einen Winkel (37) enthält, der mit dem Gehäuse (31) fest verbunden ist. Eine Arretierungsschraube (38) dient als Sicherung und hält das Gehäuse (31) mit der Grundplatte (1) in einer stabilen Lage.

Die Leitungszuführungen (32) und (33) zu den Niedervoltstrahlern bestehen jeweils aus einem Rohr. Die in der Figur nicht dargestellten elektrischen Leiter sind in diesen Rohren verlegt und an den Lüsterklemmen (12) angeschlossen. Der Gehäusedeckel (36) kann vorzugsweise so gestaltet sein, dass er sich im Seitenteil allein durch Reibung hält.

Aus Fig. 5 sind die Aussparungen (14) der Grundplatte (1) sowie der Winkel (37) mit der Arretierungsschraube (38) zu entnehmen. Nach der Drehung des Gehäuses (31) am Umfang der Grundplatte (1) ist die Position der Noppen (34) und (35) verändert, wie es in Fig. 5 gestrichelt angedeutet ist. Im Zentrum ist die Grundplatte (1) mit einer Öffnung (41) versehen, die zur Zuführung der Stromversorgungsleitungen dient.

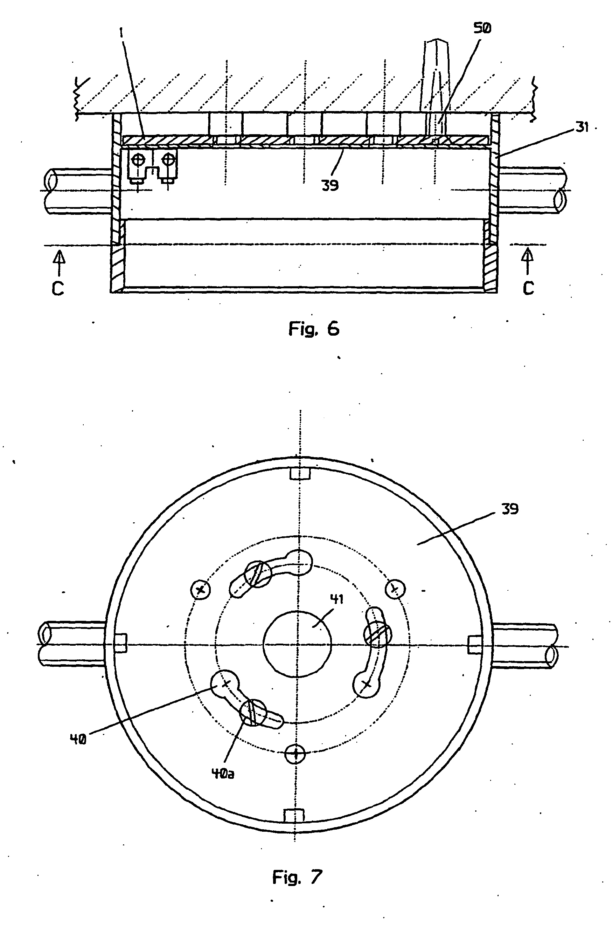

In einer Ausführungsform des Haltesystems für die Stromversorgung von Niedervoltstrahlern gemäss Fig. 6 ist das Gehäuse (31) mit einer Bodenplatte (39) verbunden, die an der Grundplatte (1) befestigt ist.

In einer besonders vorteilhaften weiteren Ausgestaltung der Erfindung kann diese Bodenplatte (39) mit einem Drehverschluss an der Grundplatte (1) befestigt sein, wie es in der Fig. 7 angedeutet ist. Die Bodenplatte (39) ist mit Durchsteckbohrungen (40) versehen, an der sich in Drehrichtung jeweils ein Langloch anschliesst. Der Durchmesser der Durchsteckbohrung (40) ist etwas grösser als der Kopf der Befestigungsschrauben (40a), während die Breite der Langlöcher nicht wesentlich grösser als der Durchmesser der betreffenden Schraube ist.

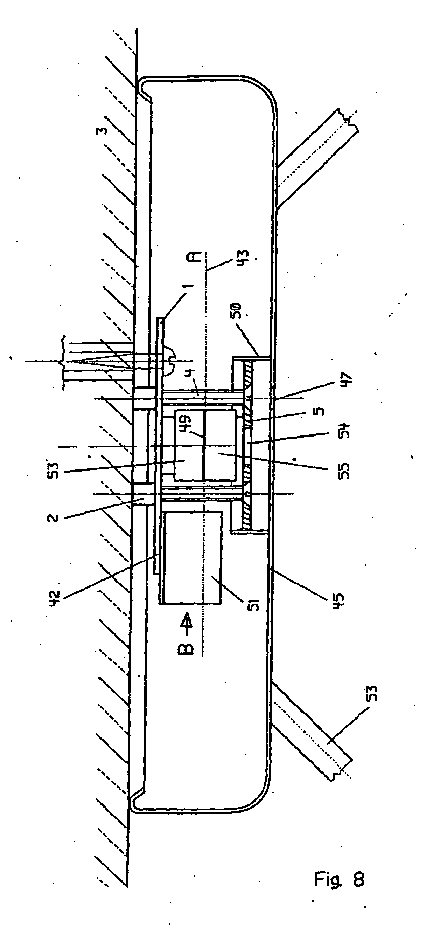

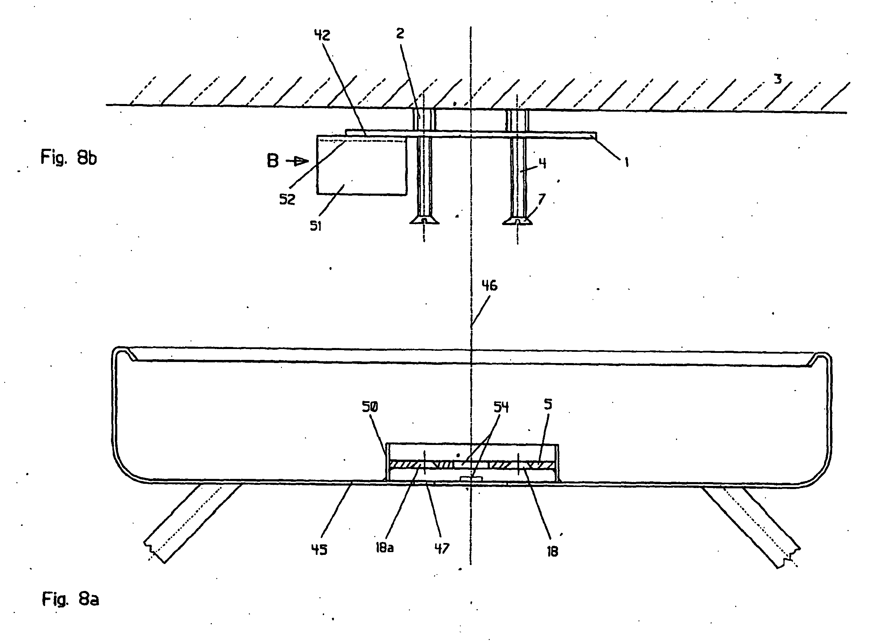

In der Ausführungsform gemäss der Fig. 8 ist die scheibenförmige Auflage (5) von einem hohlzylindrischen Tragteil (50) umgeben, dessen unterer Rand mit einem Gehäuse (45), zentrisch verbunden, beispielsweise verschraubt ist. In einer weiteren Ausführungsform kann die Auflage (5) mit einem Tragteil (50) und dem Gehäuse (45) auch ein gemeinsames Bauteil bilden. Ferner können diese Bauteile mit den Befestigungsschrauben (4) einen Bajonettverschluss bilden.

Zu diesem Zweck sind die Durchsteckbohrungen (18) und die Senkbohrungen (18a) sowie die Befestigungsschrauben (4) in einer gemeinsamen Mittelachse (46) zentriert, wie es in den Fig. 8a und Fig. 8b angedeutet ist. Nach Drehung des Bajonettverschlusses können die Befestigungsschrauben (4) fixiert werden. Zu diesem Zweck ist die Auflage (5) mit entsprechenden Freibohrungen versehen.

Ein Transformator (51), beispielsweise 230/12 Volt, kann gemäss Fig. 8b an der Grundplatte (1) in bekannter Weise, vorzugsweise mit einer Schwalbenschwanz - Verbindung, befestigt sein. Zu diesem Zweck ist der Transformator (51) mit einer entsprechender Nut (52) versehen. Die Schwalbenschwanzführung Nut/Feder ist an der Grundplatte (1) befestigt.

Die in den Figuren zur Vereinfachung nicht dargestellter Stromzuführung erfolgt gemäss Fig. 8 vom Netz zum Transformator (51) und nach der Transformation zur Dose (53) der Steckverbindung (49), die mit der Grundplatte (1) verbunden ist Die Niedervoltleitungen die in der Figur nicht dargestellten Strahler sind über isolierten Leitungen, die in der Figur lediglich als Stutzen angedeutet sind, über eine Öffnung (54) mit dem Stutzen verbunden.

Die Ausführungsform gemäss den Fig. 8 bis Fig. 8b hat den besonderen Vorteil, dass die Kontaktierung zwischen Stecker (55) und der Dose (53) über die Halteschrauben (4) erfolgt. Sobald durch Drehen des Bajonettverschlusses die Befestigungsschrauben (4) ihre Endposition erreicht haben, wird durch Drehung dieser Schrauben über die Bohrungen (47) der elektrische Kontakt zwischen Stecker (55) und der Dose (53), erreicht.

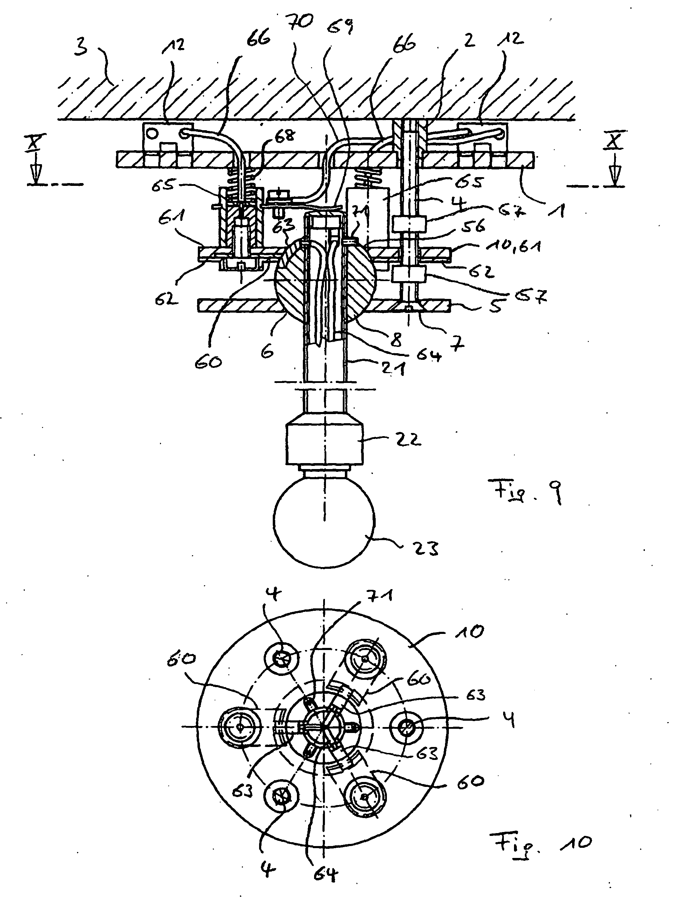

Die Ausführungsform gemäß Fig. 9 und 10 enthält im Wesentlichen eine Kugelaufhängung gemäß Fig. 1. Abweichend von dem dortigen Ausführungsbeispiel ist gemäß Fig. 9 aber die Begrenzungsplatte (10) mit drei elektrisch leitenden Kontaktfeldern (60) versehen, die am Rand der zentralen Öffnung (56) an die Oberfläche der Begrenzungsplatte (10) vorstehen, und die hierdurch bei montierter Kugel (8) an deren Umfang anliegen. Ansonsten sind die Kontaktfelder (60) sandwichartig zwischen zwei Isolierschichten (61) und (62) der Begrenzungsplatte (10) und somit nach außen hin berührungssicher eingebettet. Korrespondierend mit den Kontaktfeldern (60) sind am Umfang der Kugel (8) gemäß Fig. 9 und 10 drei elektrisch leitende Gegenkontaktfelder (63) vorgesehen.

In der Ausführung gemäß Fig. 9 und 10 enthält der Beleuchtungskörper (23) zwei (nicht explizit dargestellte) elektrische Verbraucher in Form jeweils einer Glühlampe. Der Phasenanschlusskontakt jeder Glühlampe wird dabei durch jeweils eine separate Zuleitung (64) kontaktiert, die mit einem der Gegenkontaktfelder (63) verbunden ist. Die Nullleiteranschlusskontakte der beiden Glühlampen sind miteinander kurzgeschlossen und werden durch eine dritte Zuleitung (64) kontaktiert, die an dem dritten Gegenkontaktfeld (63) angeklemmt ist.

Jedes Kontaktfeld (60) ist seinerseits mit einer Anschlussklemme (65) in Form einer Schraubklemme elektrisch verbunden, über die eine andererseits mit einer der Lüsterklemmen (12) verbundene elektrische Zuleitung (66) an diese Kontaktfläche (60) angeschlossen werden kann.

Die drei Kontaktfelder (60) sind - wie aus Fig. 10 ersichtlich ist - in Umfangsrichtung der Begrenzungsplatte (10) zueinander jeweils in einem Winkel von 120° angeordnet, und liegen somit quasi auf den Eckpunkten eines gedachten gleichseitigen Dreiecks. Ebenso sind die Gegenkontaktfelder (63) in Umfangsrichtung derjenigen Anlagefläche, mit der die Kugel (8) in Montagestellung am Rand der Öffnung (56) anliegt, um einen Winkel von 120° versetzt. Auf diese Weise liegt bei geeigneter Drehstellung der Kugel (8) jedes Gegenkontaktfeld (63) an einem Kontaktfeld (60) berührend an. Über die entsprechenden Zuleitungen (66), die entsprechenden Anschlussklemmen (65), die entsprechenden Kontaktfelder (60), die jeweils daran anliegenden Gegenkontaktfelder (63), und die abgehenden Zuleitungen (64) kann somit ein elektrischer Kontakt zwischen dem Schraubsockel (22) und den Lüsterklemmen (12) hergestellt werden. Der in den Schraubsockel (22) eingeschraubte Leuchtkörper (23) kann somit über die Begrenzungsplatte (10) und die Kugel (8) mit über die Lüsterklemmen (12) anzuschließenden Netzleitungen kontaktiert werden.

Die drei vorgesehenen Kontaktfelder (60) mit zugehörigen Anschlussklemmen (65) ermöglichen dabei vorteilhaft den Anschluss von zwei Phasenleitungen und einem gemeinsamen Nullleiter. Dabei kann durch einfaches Drehen der Kugel (8) entschieden werden, ob beide Glühlampen zwischen jeweils eine Phase und den Nullleiter geschaltet werden soll, oder ob nur eine der beiden Glühlampen zwischen Phase und Nullleiter geschaltet werden soll - die jeweils andere Glühlampe ist einer dieser Kugelstellungen zwischen die beiden Phasenanschlüsse geschaltet und somit zwangsweise stromlos.

Zwischen zwei benachbarten Kontaktfeldern (60) ist - wie aus Fig. 10 ersichtlich ist - in Umfangsrichtung der Begrenzungsplatte (10) jeweils ein isolierender Bereich gebildet, denen Breite (genauer: Umfangsausdehnung) die Breite eines jeden Gegenkontaktfeldes (63) wesentlich überschreitet. Bei Drehung der Kugel (8) ist hierdurch zwischen jeder Kontaktstellung, in der die Gegenkontaktfelder (63) eines der Kontaktfelder (60) berühren, eine Nullstellung gebildet, in der die Gegenkontaktfelder (63) auf der Isolierschicht (62) der Begrenzungsplatte (10) anliegen, und der Leuchtkörper (23) somit zwangsweise ausgeschaltet ist.

Die Begrenzungsplatte (10) ist an den Befestigungsschrauben (4) verschiebbar geführt, wobei der Verschiebeweg der Begrenzungsplatte (10) durch auf die Befestigungsschrauben (4) aufgeschraubte Schraubenmuttern (67) begrenzt wird. Um einen für die elektrische Kontaktierung von Kontaktfeldern (60) und Gegenkontaktfeldern (63) hinreichenden Andruck der Begrenzungsplatte (10) auf dem Umfang der Kugel (8) sicherzustellen, ist die Begrenzungsplatte (10) durch drei (Schrauben-)Druckfedern (68) in Richtung auf die Auflage (5) federbelastet. Jede Druckfeder (68) sind an einem oberen Ende einer zugeordneten Anschlussklemme (65) eingefasst und wirkt zwischen dieser Anschlussklemme (65) und der Grundplatte (1). Die Druckfedern (68) dienen dabei gleichzeitig als Führung für die Zuleitungen (66).

Auf eine der Anschlussklemmen (65) ist weiterhin - sofern erforderlich - ein Blattfederkontakt (69) aufgeklipst, der als Schutzleiterkontakt gegen ein elektrisch leitendes oberes Ende des Hohlkörpers (21) anschlägt. Mit dem Blattfederkontakt (69) ist eine Zuleitung (70) schraubklemmkontaktiert, die andererseits zum Anschluss eines netzseitigen Schutzleiters an eine der Lüsterklemmen (12) angeschlossen ist.

Der in die Kugel (8) eingeschraubte Hohlkörper (21) wird durch drei durch Durchführungen der Kugel (8) etwa radial in ihn eingeschraubte Schraubbolzen (71) an der Kugel (8) gegen eine Verdrehung gesichert.

Das Haltesystem (1) gemäß Fig. 9 und 10 kann wahlweise mit oder ohne den in Fig. 1 abgebildeten Baldachin (13) montiert werden. Anstelle des Baldachins (13) kann hier auch ein Rohrring zum Einsatz kommen, der den zwischen der Grundplatte (1) und dem Bauteil (3) gebildeten Raum randseitig abschließt. Dieser Rohrrring ist dabei insbesondere - analog zu dem Baldachin (13) - über einen Bajonettverschluss an der Grundplatte fixiert.

### Bezugszeichenliste

- 1: Grundplatte
- 2: Abstandshalter
- 3: Bauteil
- 4: Befestigungsschrauben
- 5: Auflage
- 6: Öffnung
- 7: Senkkopf
- 8: Kugel
- 9: Gewindebohrung
- 10: Begrenzungsplatte
- 11: Freibohrung
- 12: Lüsterklemme
- 13: Baldachin
- 14: Aussparung
- 15: Kontermuttern
- 16: Noppen
- 17: Freibohrung
- 18: Durchsteckbohrung
- 18a: Senkbohrungen
- 19: Richtungspfeil
- 20: Langloch
- 21: Hohlkörper
- 22: Schraubfassung
- 23: Beleuchtungskörper
- 24: Isolierstück
- 25: Kontermuttern
- 26: Befestigungsschraube
- 27: Steckdose
- 28: Zwischenplatte
- 29: Bohrung
- 30: Abstandsstücke
- 31: Gehäuse
- 32: Leitungszuführung
- 33: Leitungszuführung
- 34: Noppen
- 35: Noppen
- 36: Gehäusedeckel
- 37: Winkel
- 38: Arretierungsschraube
- 39: Bodenplatte
- 40: Durchsteckbohrung
- 40a: Befestigungsschraube
- 41: Öffnung
- 42: Schwalbenschwanz
- 43: Trennebene
- 45: Gehäuse
- 46: Mittelachse
- 47: Freibohrungen
- 49: Steckverbindung
- 50: Tragteil
- 51: Transformator
- 52: Nut
- 53: Dose
- 54: Öffnung
- 55: Stecker
- 56: Öffnung
- 60: Kontaktfeld
- 61: Isolierschicht
- 62: Isolierschicht
- 63: Gegenkontaktfeld
- 64: Zuleitung
- 65: Anschlussklemme
- 66: Zuleitung
- 67: Schraubenmutter
- 68: Druckfeder
- 69: Blattfederkontakt
- 70: Zuleitung
- 71: Schraubbolzen

## Patentansprüche

1. Haltesystem für mindestens ein elektrisches Gerät, das an ein unbewegliches Bauteil angeschlossen ist, mit einer Grundplatte (1), die wenigstens teilweise aus elektrisch isolierendem Material besteht und die mit wenigstens einem Abstandshalter (2) mit dem unbeweglichen Bauteil (3) verbunden bzw. verbindbar ist; **dadurch gekennzeichnet, dass** in dem oder jedem Abstandshalter (2) eine Befestigungsschraube (4) fixiert ist, wobei diese Befestigungsschrauben (4) zugleich zur Befestigung einer flachen Auflagen (5) dienen, und wobei die Befestigungsschrauben (4) mit der Auflage (5) einen Bajonettverschluss zur Halterung der Auflage (5) an den Befestigungsschrauben (4) bilden.

2. Haltesystem nach Anspruch 1, **dadurch gekennzeichnet, dass** mindestens drei im Wesentlichen stiftförmige Abstandshalter (2) vorgesehen sind, die jeweils als Schraubbuchse zur Halterung einer Befestigungsschraube (4) ausgebildet sind.

3. Haltesystem nach Anspruch 1 oder 2, **dadurch gekennzeichnet, dass** die Auflage (5) mit einer Öffnung (6) zur Aufhängung einer das elektrische Gerät haltenden Kugel (8) versehen ist.

4. Haltesystem nach Anspruch 3, **dadurch gekennzeichnet, dass** zwischen der Grundplatte (1) und der Auflage (5) eine Begrenzungsplatte (10) derart angeordnet ist, dass die Kugel (8) zwischen der Auflage (5) und der Begrenzungsplatte (10) einfassbar ist.

5. Haltesystem nach einem der Ansprüche 1 bis 4, **dadurch gekennzeichnet, dass** die Grundplatte (1) mit einem Baldachin (13) abgedeckt ist.

6. Haltesystem nach einem der Ansprüche 1 bis 5, **dadurch gekennzeichnet, dass** die Grundplatte (1) scheibenförmig ausgebildet und an ihrem Rande mit wenigstens einer Aussparung (14) versehen ist, und dass der Baldachin (13) kappenförmig ausgebildet, und an seinem Rand mit Noppen (16) versehen ist, die beim Aufsetzen des Baldachins (13) auf die Grundplatte (1) in die mindestens eine Aussparung (14) der Grundplatte (1) eingreifen.

7. Haltesystem nach einem der Ansprüche 1 bis 6, **dadurch gekennzeichnet, dass** die Grundplatte (1) zur Befestigung einer Schraubfassung (22) vorgesehen ist.

8. Haltesystem nach einem der Ansprüche 1 bis 7, **dadurch gekennzeichnet, dass** die Grundplatte (1) zur Befestigung einer Steckdose (27) vorgesehen ist.

9. Haltesystem nach einem der Ansprüche 1 bis 8, **dadurch gekennzeichnet, dass** die Grundplatte (1) zur Versorgung einer Vielzahl von Niedervolt Strahlem vorgesehen ist.

10. Haltesystem nach Anspruch 9, **dadurch gekennzeichnet, dass** ein hohlzylindrisches Gehäuse (31) vorgesehen ist, dass mit Leitungszuführungen (32/33) eine Baueinheit bildet.

11. Haltesystem nach Anspruch 10, **dadurch gekennzeichnet, dass** das Gehäuse (31) am oberen Rand mit Noppen (34/35) versehen ist, die mit entsprechenden Aussparungen (14) am Rand der Grundplatte (1) einen Bajonettverschluss bilden.

12. Haltesystem nach einem der Ansprüche 1 bis 11, **dadurch gekennzeichnet**, das die Auflage (5) mit wenigstens einem Stecker (55) versehen ist, der mit einer in der Grundplatte (1) angeordneten Dose (53) eine elektrische Steckverbindung bildet.

13. Haltesystem nach einem der Ansprüche 4 bis 12, **dadurch gekennzeichnet, dass** die Begrenzungsplatte (10) mindestens zwei Anschlussklemmen (65) zur Kontaktierung je einer elektrischen Zuleitung (66) sowie mindestens zwei jeweils mit einer Anschlussklemme (65) leitend verbundene Kontaktfelder (60) aufweist, wobei jedes Kontaktfeld (60) an einer Anlagefläche der Begrenzungsplatte (10) angeordnet ist, an der die Kugel (8) in eingebaute Zustand mit ihrem Umfang anliegt, und dass am Umfang der Kugel (8) mindestens zwei jeweils mit einem Kontaktfeld (60) korrespondierende Gegenkontaktfelder (63) angeordnet sind, deren jedes mit einer geräteseitigen elektrischen Zuleitung (64) kontaktierbar ist.

14. Haltesystem nach Anspruch 13, **gekennzeichnet durch** drei Anschlussklemmen (65) und drei jeweils mit einer Anschlussklemme (65) verbundene Kontaktfelder (60), wobei die Kontaktfelder (60) gleichmäßig um die Anlagefläche der Begrenzungsplatte (10) herum angeordnet sind.

## Claims

1. Support system for at least one electrical device, which is attached to an immobile component, said support system having a base plate (1), which consists at least partially of an electrically isolating material and which is connected or connectable with the immobile component (3) via at least one spacer (2), **characterized in that** a fastening screw (4) is fixed in the spacer or in each of the spacers (2), whereby these fastening screws (4) at the same time serve for fastening a flat support (5), and whereby the fastening screws (4), together with the support (5), form a bayonet catch for mounting the support (5) at the fastening screws (4).

2. Support system according to claim 1, **characterized in that** at least three, essentially pin-shaped spacers (2) are provided, each being developed as screw bushings for holding a fastening screw (4).

3. Support system according to claim 1 or 2, **characterized in that** the support (5) has an opening (6) for suspension of a sphere (8) holding the electrical device.

4. Support system according to claim 3, **characterized in that** a boundary plate (10) is arranged between the base plate (1) and the support (5) in such a way, that the sphere (8) can be enclosed between the support (5) and the boundary plate (10).

5. Support system according to one of the claims 1 through 4, **characterized in that** the base plate (1) is covered with a baldachin (13).

6. Support system according to one of the claims 1 through 5, **characterized in that** the base plate (1) is disc-shaped and furnished at its edge with at least one notch (14), and that the baldachin (13) is cap-shaped and furnished at its edge with naps (16), which, when the baldachin (13) is placed on the base plate (1), mesh with the at least one notch (14) of the base plate (1 ).

7. Support system according to one of the claims 1 through 6, **characterized in that** the base plate (1) is provided for mounting a screw socket (22).

8. Support system according to one of the claims 1 through 7, **characterized in that** the base plate (1) is provided for mounting an electric socket (27).

9. Support system according to one of the claims 1 through 8, **characterized in that** the base plate (1) is provided for supplying a number of low-voltage spots.

10. Support system according to claim 9, **characterized in that** a hollow cylindrical housing (31) is provided, which forms an assembly together with the entry points for cables (32/33).

11. Support system according to claim 10, **characterized in that** the housing (31) has naps (34/35) at the upper edge, which, together with corresponding notches (14) at the edge of the base plate (1), form a bayonet catch.

12. Support system according to one of the claims 1 through 11, **characterized in that** the support (5) is provided with at least one plug (55), which, together with a socket (53) forms an electrical plug connection, said socket (53) being located in the base plate (1).

13. Support system according to one of the claims 4 through 12, **characterized in that** the boundary plate (10) has at least two connecting terminals (65), each for contacting one electrical feed (66), as well as at least two contact panels (60), each conductively connected via a terminal clamp (65), whereby each contact panel (60) is arranged at a contact surface of the boundary plate (10) against which the sphere (8) rests with its periphery in the assembled state, and that located at the periphery of the sphere (8) are at least two counter-contact panels (63), each corresponding with a contact panel (60), each of which being connectable with an electrical feed (64) on the device side.

14. Support system according to claim 13, **characterized in** having three terminal clamps (65) and three contact panels (60), each of which is connected via a terminal clamp (65), whereby the contact panels (60) are arranged evenly along the contact surface of the boundary plate (10).

## Revendications

1. Système de support pour au moins un appareil électrique, qui est raccordé à une pièce de construction non mobile, comprenant une plaque de base (1), qui est réalisée au moins partiellement en un matériau électriquement isolant, et est ou peut être reliée à la pièce de construction (3) non mobile par l'intermédiaire d'au moins une entretoise d'espacement (2), **caractérisé en ce que** dans l'entretoise ou dans chaque entretoise d'espacement (2) est fixée une vis de fixation (4), ces vis de fixation (4) servant simultanément à la fixation d'un support d'appui plan (5), et les vis de fixation (4) formant avec le support d'appui (5), un système de liaison à baïonnette pour le maintien du support d'appui (5) sur les vis de fixation (4).

2. Système de support selon la revendication 1, **caractérisé en ce que** sont prévues au moins trois entretoises d'espacement (2) sensiblement en forme de broche, qui sont réalisées chacune en tant que douille de vissage pour assurer le maintien d'une vis de fixation (4).

3. Système de support selon la revendication 1 ou la revendication 2, **caractérisé en ce que** le support d'appui (5) est pourvu d'une ouverture (6) pour l'accrochage d'une rotule (8) servant au maintien de l'appareil électrique.

4. Système de support selon la revendication 3, **caractérisé en ce qu'**entre la plaque de base (1) et le support d'appui (5) est agencée une plaque de délimitation (10), de façon telle que la rotule (8) puisse être enserrée entre le support d'appui (5) et la plaque de délimitation (10).

5. Système de support selon l'une des revendications 1 à 4, **caractérisé en ce que** la plaque de base (1) est recouverte par un dais ou pavillon (13).

6. Système de support selon l'une des revendications 1 à 5, **caractérisé en ce que** la plaque de base (1) est réalisée en forme de disque et est pourvue, au niveau de son bord, d'au moins une encoche (14), et **en ce que** le pavillon (13) est réalisé sous la forme d'un capuchon et est muni, au niveau de son bord, de plots (16) qui, lors de la mise en place du pavillon (13) sur la plaque de base (1), viennent s'engager dans ladite au moins une encoche (14) de la plaque de base (1).

7. Système de support selon l'une des revendications 1 à 6, **caractérisé en ce que** la plaque de base (1) est prévue pour la fixation d'une douille à vis (22).

8. Système de support selon l'une des revendications 1 à 7, **caractérisé en ce que** la plaque de base (1) est prévue pour la fixation d'une prise de courant (27).

9. Système de support selon l'une des revendications 1 à 8, **caractérisé en ce que** la plaque de base (1) est prévue pour l'alimentation d'une pluralité d'appareils rayonnants basse tension.

10. Système de support selon la revendication 9, **caractérisé en ce qu'**il est prévu un boitier (31) cylindrique creux, qui forme un module avec des amenées d'alimentation (32/33).

11. Système de support selon la revendication 10, **caractérisé en ce que** le boitier (31) est muni, au niveau de son bord supérieur, de plots (34/35), qui forment, avec des évidements (14) correspondants au niveau du bord de la plaque de base (1), un système de liaison à baïonnette.

12. Système de support selon l'une des revendications 1 à 11, **caractérisé en ce que** le support d'appui (5) est pourvu d'au moins une fiche de connexion (55), qui forme, avec une boite de connexion (53) agencée dans la plaque de base (1), un système de connecteur électrique à fiche.

13. Système de support selon l'une des revendications 4 à 12, **caractérisé en ce que** la plaque de délimitation (10) présente au moins deux bornes de raccordement (65) pour contacter chacune un conducteur d'alimentation électrique (66), ainsi qu'au moins deux zones de contact (60) reliées chacune respectivement à une borne de raccordement (65), chaque zone de contact (60) étant agencée sur une surface d'appui de la plaque de délimitation (10) contre laquelle s'appuie, avec sa périphérie, la rotule (8) dans l'état monté, et **en ce que** sur la périphérie de la rotule (8) sont agencées au moins deux zones de contact conjuguées (63) correspondant respectivement à une zone de contact (60), et dont chacune peut être contactée à un conducteur d'alimentation électrique (64) de l'appareil.

14. Système de support selon la revendication 13, **caractérisé par** trois bornes de raccordement (65) et trois zones de contact (60) reliées chacune respectivement à une borne de raccordement (65), les zones de contact (60) étant agencées de manière régulièrement répartie autour de la surface d'appui de la plaque de délimitation (10).
